# EUROPÄISCHE PATENTSCHRIFT

(11) **EP 2 216 124 B1**
(45) Veröffentlichungstag und Bekanntmachung des Hinweises auf die Patenterteilung: **25.12.2013**
(21) Anmeldenummer: 10152139.1
(22) Anmeldetag: 29.01.2010
(51) Int. Cl.: B23K 9/095

(54) **Verfahren zum Regeln einer Schweißstromquelle sowie Schweißstromquelle zur Durchführung des Verfahrens**
Method for regulating a welding power source and welding power source for carrying out the method
Procédé destiné au réglage d'un poste de soudage à l'arc et poste de soudage à l'arc destiné à l'exécution du procédé

(30) Priorität: 04.02.2009 DE 102009008199
(43) Veröffentlichungstag der Anmeldung: 11.08.2010
(73) Patentinhaber: Lorch Schweisstechnik GmbH, 71549 Auenwald (DE)
(72) Erfinder: Aigner, Hubert, 4715 Taufkirchen (AT)
(74) Vertreter: Hoeger, Stellrecht & Partner Patentanwälte

(56) Entgegenhaltungen:
- DE-B3- 10 307 066
- JP-A- 59 174 277
- US-A1- 2007 217 231

## Beschreibung

Die Erfindung betrifft ein Verfahren zum Regeln einer Schweißstromquelle mit den Merkmalen des Oberbegriffes von Patentanspruch 1.

Außerdem betrifft die Erfindung eine Schweißstromquelle zur Durchführung des Verfahrens.

Lichtbogen-Schweißverfahren, bei denen zwischen einer Schweißelektrode und einem Werkstück ein Lichtbogen brennt, sind in verschiedenen Ausgestaltungen bekannt. Hierbei wird zwischen einer Schweißelektrode und einem Werkstück ein Lichtbogen gezündet, der das lichtbogenseitige Ende der Schweißelektrode so stark erhitzt, dass der Werkstoff in Form von Tropfen auf das Werkstück übergeht. Der Übergang der Tropfen kann zur Ausbildung eines Kurzschlusses zwischen der Schweißelektrode und dem Werkstück führen, so dass der von der Schweißelektrode zum Werkstück fließende Schweißstrom sich sehr stark erhöht. Damit sich beim Werkstückübergang keine Spritzer bilden, wird der Schweißstrom üblicherweise geregelt. Hierzu sind beispielsweise Schweißstromquellen bekannt in Form so genannter Serien-Parallel-Resonanzkonverter. Diese umfassen einen Stromwandler, üblicherweise einen Transformator, der primärseitig einen seriellen Schwingkreis und sekundärseitig einen parallelen Schwingkreis aufweist. Der serielle Schwingkreis wird von einer Brückenschaltung mit einer variablen Wechselspannung versorgt und der parallele Schwingkreis stellt über einen Gleichrichter dem Schweißprozess die erforderliche Energie bereit. Eine Steuereinheit steuert die Brückenschaltung in Abhängigkeit von mindestens einer Zustandsgröße der Schweißstromquelle.

Zur Regelung der Schweißstromquelle wird in der WO 01/53030 A1 der Einsatz zweier Messvorrichtungen zum Erfassen von Strom-Zustandsgrößen der Schweißstromquelle vorgeschlagen, nämlich eine erste Messvorrichtung, mit deren Hilfe der Primärstrom des Stromwandlers erfasst werden kann, und eine zweite Messvorrichtung, mit deren Hilfe der Sekundärstrom des Stromwandlers erfasst werden kann. Die Einbeziehung des Sekundärstromes ist bei dem in der genannten Druckschrift offenbarten Regelungsverfahren für die Festlegung bzw. die Berechnung der Pulsbreite der Wechselspannung notwendig. Die Erfassung des Sekundärstromes erfordert entweder einen Shunt oder aber einen Messwertaufnehmer, dessen Funktion auf dem Hall-Prinzip beruht. Der Einsatz eines Shuntes ist mit einer nicht unbeachtlichen Verlustleistung verbunden und der Einsatz eines Messwertaufnehmers nach dem Hall-Prinzip ist verhältnismäßig teuer.

Aus der Veröffentlichung DE 103 07 066 B3 ist ein Verfahren mit den Merkmalen des Oberbegriffes von Patentanspruch 1 bekannt. Mittels einer Abtasteinrichtung wird der momentane zeitliche Verlauf des Primärstroms erfasst. Der Abtasteinrichtung ist eine Detektoreinrichtung zugeordnet, die zum Zeitpunkt des Nulldurchgangs des Magnetisierungsstroms den Augenblickswert des Primärstroms detektiert und speichert. Der Abtasteinrichtung ist außerdem eine Recheneinheit zugeordnet, die mittels des gespeicherten Wertes des Primärstroms einen Wert bestimmt, der dem Sekundärstrom entspricht.

Aus JP 59 174277 A ist zum Regeln einer Schweißstromquelle ein Verfahren bekannt, bei dem man den Primärstrom erfasst und ein Spannungssignal erzeugt, das dem Gleichstromanteil des Primärstroms entspricht. Das Spannungssignal wird zusammen mit einem Steuersignal einem Korrekturkreis zugeführt, der Ausgangsspannungen ausgibt in Abhängigkeit davon, ob das Spannungssignal positiv oder negativ ist. Die Ausgangsspannungen werden mit Hilfe eines Pulsweitenmodulators moduliert und dann einem Steuerkreis zugeführt, der die Brückenschaltung steuert.

Auch in der Veröffentlichung US 2007/217231 A1 wird ein Verfahren zum Regeln einer Schweißstromquelle beschrieben, bei dem man den Primärstrom erfasst und ein entsprechendes Steuersignal zur Steuerung des Steuerkreises verwendet.

Aufgabe der vorliegenden Erfindung ist es, ein Verfahren zum Regeln einer Schweißstromquelle der eingangs genannten Art bereitzustellen, das eine kostengünstigere und möglichst verlustleistungslose Regelung des Schweißstromes ermöglicht. Außerdem soll eine Schweißstromquelle zur Durchführung eines derartigen Verfahrens bereitgestellt werden.

Diese Aufgabe wird bei einem Verfahren durch die Merkmale von Patentanspruch 1 gelöst.

In die Erfindung fließt der Gedanke mit ein, dass bei einem Serien-Parallel-Resonanzkonverter eine einfache Regelung allein durch Erfassung des Primärstromes oder einer dem Primärstrom entsprechenden primärseitigen Zustandsgröße erzielt werden kann. Der Primärstrom, also der im seriellen Schwingkreis fließende Strom, gibt über das Übersetzungsverhältnis des Stromwandlers den Sekundärstrom des Stromwandlers vor. Der Sekundärstrom ist aufgrund des parallelen Schwingkreises zwar nicht identisch mit dem Schweißstrom, vielmehr fließt in der Regel nur ein Teil des Sekundärstromes zum Schweißprozess, der maximale Schweißstrom wird aber durch den Primärstrom vorgegeben. Dies hat seinen Grund darin, dass im Falle eines Kurzschlusses zwischen der Schweißelektrode und dem Werkstück, also bei einem Lichtbogenwiderstand von Null Ohm, der Sekundärstrom mit dem Schweißstrom praktisch identisch ist. Da der Sekundärstrom durch die Höhe des Primärstromes vorgegeben ist, kann durch Regelung des Primärstroms oder einer dem Primärstrom entsprechenden primärseitigen Zustandsgröße auch der maximale Schweißstrom vorgegeben werden. Hierzu ist es lediglich primärseitig erforderlich, eine Messvorrichtung vorzusehen, eine entsprechende Messvorrichtung ist jedoch sekundärseitig nicht erforderlich. Allein durch Regeln des Primärstromes oder einer dem Primärstrom entsprechenden primärseitigen Zustandsgröße kann der Maximalwert des Schweißstromes vorgegeben werden. Hierbei kann primärseitig zum Beispiel ein kostengünstiger und verlustleistungsloser magnetischer Stromwandler zum Einsatz kommen. Derartige Stromwandler sind üblicherweise schon aus Gründen der Stromüberwachung zur Vermeidung einer Beschädigung der Brückenschaltung vorgesehen.

Als dem Primärstrom entsprechende primärseitige Zustandsgröße kann man beispielsweise die im primärseitigen Schwingkreis an einem Kondensator abfallende Spannung erfassen. Diese Spannung entspricht dem Primärstrom bis auf einen Faktor und eine Phasenverschiebung. Diese Spannung stellt ein Maß für den Primärstrom dar und kann ebenfalls zur Regelung herangezogen werden.

Eine verbesserte Regelung wird beim erfindungsgemäßen Verfahren dadurch erzielt, dass man als weitere Zustandsgröße die Resonanzfrequenz der Schweißstromquelle erfasst und zur Bildung eines Steuersignals für die Steuereinheit den Wert des erfassten Primärstromes oder der dem Primärstrom entsprechenden primärseitigen Zustandsgröße in Abhängigkeit von der Resonanzfrequenz korrigiert. Beim erfindungsgemäßen Verfahren kann beispielsweise zusätzlich zur Amplitude des Primärstroms auch dessen Frequenz bestimmt werden. Die Frequenz des Primärstromes ist identisch mit der Resonanzfrequenz der Schweißstromquelle. Die Resonanzfrequenz ist von der Kapazität des parallelen und des seriellen Schwingkreises, von der Induktivität und vom Lichtbogenwiderstand abhängig. Im Falle eines niederohmigen Lichtbogens, insbesondere bei einem Kurzschluss, nimmt die Resonanzfrequenz einen Wert ein, der sich von der Resonanzfrequenz eines hochohmigen Lichtbogens deutlich unterscheidet. Die Erfassung der Resonanzfrequenz ermöglicht somit eine Schlussfolgerung auf den aktuellen Zustand des Lichtbogens, insbesondere kann durch die Erfassung der Resonanzfrequenz das Vorliegen eines Kurzschlusses innerhalb sehr kurzer Zeit erkannt werden und es kann dann dem Kurzschluss entgegengewirkt werden zur Vermeidung von Spritzern beim Werkstoffübergang zwischen der Schweißelektrode und dem Werkstück. Die Erfassung der Resonanzfrequenz kann auch dadurch erfolgen, dass man die Frequenz einer dem Primärstrom entsprechenden primärseitigen Zustandsgröße bestimmt. Auch deren Frequenz ist mit der Resonanzfrequenz identisch.

Von Vorteil ist es, wenn man den Primärstrom oder die dem Primärstrom entsprechende primärseitige Zustandsgröße auf eine gleich bleibende Amplitude regelt. Wie bereits erläutert, wird durch die Amplitude des Primärstromes der Maximalwert des Schweißstromes vorgegeben. Regelt man den Primärstrom oder die dem Primärstrom entsprechende primärseitige Zustandsgröße auf eine gleich bleibende Amplitude, so führt dies dazu, dass sich der Schweißstrom in Abhängigkeit vom Lichtbogenwiderstand ändert. Dies bedeutet, dass bei einem Kurzschluss im Lichtbogen der Schweißstrom seinen höchsten Wert einnimmt und sich mit zunehmendem Lichtbogenwiderstand reduziert. Dieses Verhalten des Schweißstromes ergibt somit eine Ausgangskennlinie der Stromquelle, welche ein brauchbares Schweißverhalten darstellt. Der Schweißstrom kann zwar nicht exakt geregelt werden, da dieser vom Lichtbogenwiderstand abhängig ist. Für kostengünstige Schweißgeräte ist dies aber durchaus akzeptabel.

Von besonderem Vorteil ist es, wenn man aus der erfassten Resonanzfrequenz den Lichtbogenwiderstand des Schweißprozesses bestimmt und den erfassten Wert des Primärstromes oder der dem Primärstrom entsprechenden primärseitigen Zustandsgröße in Abhängigkeit vom Lichtbogenwiderstand korrigiert. Wie bereits erwähnt, ist die Resonanzfrequenz unter anderem von der Kapazität des parallelen Schwingkreises abhängig sowie vom Lichtbogenwiderstand. Die Werte der Kapazitäten der Schwingkreise und der Induktivität sind konstant und herstellerseitig durch die zum Einsatz kommenden Bauteile vorgegeben. Dies ermöglicht eine Bestimmung des Lichtbogenwiderstandes aus dem Wert der erfassten Resonanzfrequenz. Die Größe des Lichtbogenwiderstandes wiederum kann zur Korrektur des erfassten Primärstromes oder der dem Primärstrom entsprechenden primärseitigen Zustandsgröße herangezogen werden, um auf diese Weise eine verbesserte Regelung des Schweißstromes zu erreichen.

Der Schweißstrom ist bei den hier in Rede stehenden Schweißstromquellen, die auf dem Prinzip eines Serien-Parallel-Resonanzkonverters aufgebaut sind, relativ zum Sekundärstrom des Stromwandlers phasenverschoben um einen Phasenwinkel Φ. Die Phasenverschiebung wiederum ist abhängig von der Resonanzfrequenz sowie auch von der Kapazität des parallelen Schwingkreises und vom Lichtbogenwiderstand. Die Kapazität des parallelen Schwingkreises wird herstellerseitig vorgegeben. Dies ermöglicht es, durch Erfassung der Resonanzfrequenz den Phasenwinkel Φ zu bestimmen. Bei einer vorteilhaften Ausführungsform des erfindungsgemäßen Verfahrens ist daher vorgesehen, dass man aus der erfassten Resonanzfrequenz den Phasenwinkel zwischen dem Sekundärstrom des Stromwandlers und dem Schweißstrom bestimmt und den erfassten Wert des Primärstroms oder der dem Primärstrom entsprechenden primärseitigen Zustandsgröße in Abhängigkeit vom Phasenwinkel korrigiert. Im Falle eines Kurzschlusses beträgt der Phasenwinkel 0°, denn der gesamte Sekundärstrom fließt über den Lichtbogen, demgegenüber nähert sich der Phasenwinkel einem Wert von nahezu 90°, wenn der Lichtbogen hochohmig ist. Ein sehr geringer Phasenwinkel bedeutet, dass der Sekundärstrom praktisch mit dem Schweißstrom identisch ist und ein zur Regelung des Schweißstromes herangezogener Wert des Primärstroms lediglich um das Übersetzungsverhältnis des Stromwandlers korrigiert werden muss, dass aber eine zusätzliche Korrektur entfallen kann. Liegt jedoch ein großer Phasenwinkel vor, so bedeutet dies, dass der Sekundärstrom deutlich vom Schweißstrom abweicht und demzufolge ein zur Regelung des Schweißstromes herangezogener Wert des Primärstromes korrigiert werden sollte. Der Phasenwinkel bildet somit ein Maß für die erforderliche Korrektur des Primärstromes oder einer dem Primärstrom entsprechenden primärseitigen Zustandsgröße.

Günstig ist es, wenn man für eine vorgegebene Dimensionierung der Schweißstromquelle Tabellenwerte der Resonanzfrequenz und des Phasenwinkels in Abhängigkeit vom Lichtbogenwiderstand in einem Speicherglied hinterlegt und für einen erfassten Wert der Resonanzfrequenz den zugeordneten Wert des Lichtbogenwiderstandes und/oder des Phasenwinkels aus dem Speicherglied zur Korrektur des erfassten Messwertes abruft. Der Verlauf der Resonanzfrequenz sowie des Phasenwinkels in Abhängigkeit vom Lichtbogenwiderstand kann für eine vorgegebene Dimensionierung der Schweißstromquelle berechnet werden. Der Zusammenhang zwischen dem Lichtbogenwiderstand und der Resonanzfrequenz bzw. dem Phasenwinkel kann in Form einer Tabelle in einem Speicherglied hinterlegt werden. Wird die Frequenz des Primärstromes oder der dem Primärstrom entsprechenden primärseitigen Zustandsgröße und damit die Resonanzfrequenz der Schweißstromquelle erfasst, so kann aus dem Speicherglied der dieser Resonanzfrequenz zugeordnete Wert des Phasenwinkels und/oder des Lichtbogenwiderstandes abgerufen und zur Korrektur des erfassten Wertes des Primärstromes oder der dem Primärstrom entsprechenden primärseitigen Zustandsgröße herangezogen werden. Alternativ kann selbstverständlich auch vorgesehen sein, dass man bei einer vorgegebenen Dimensionierung der Schweißstromquelle den Wert des Lichtbogenwiderstandes bzw. den Phasenwinkel zwischen dem Sekundärstrom und dem Schweißstrom aus der erfassten Resonanzfrequenz berechnet zur Korrektur des Primärstromes oder der dem Primärstrom entsprechenden primärseitigen Zustandsgröße.

Die Korrektur des erfassten Wertes des Primärstromes oder der dem Primärstrom entsprechenden primärseitigen Zustandsgröße kann beispielsweise derart erfolgen, dass man den erfassten Wert mit dem Kosinus des Phasenwinkels multipliziert. Der Schweißstrom ergibt sich bei Schweißstromquellen der hier in Rede stehenden Art aus dem Produkt des Sekundärstromes und dem Kosinus des Phasenwinkels zwischen dem Sekundärstrom und dem Schweißstrom. Eine Regelung des Schweißstromes kann somit auf konstruktiv einfache Weise dadurch erfolgen, dass man die Amplitude und die Frequenz des Primärstromes oder der dem Primärstrom entsprechenden primärseitigen Zustandsgröße erfasst, aus der Frequenz den Phasenwinkel zwischen dem Sekundärstrom und dem Schweißstrom bei einer vorgegebenen Dimensionierung der Schweißstromquelle bestimmt und dann das Produkt aus der erfassten Amplitude des Primärstromes oder der dem Primärstrom entsprechenden primärseitigen Zustandsgröße und dem Kosinus des Phasenwinkels zur Bildung eines Steuersignals für die Brückenschaltung der Schweißstromquelle heranzieht.

Eine Verbesserung des erfindungsgemäßen Regelverfahrens wird bei einer bevorzugten Ausgestaltung dadurch erzielt, dass man als weitere Zustandsgröße die am Ausgang des Gleichrichters anliegende Ausgangsspannung der Schweißstromquelle erfasst und zur Bildung eines Steuersignals für die Steuereinheit den Wert des erfassten Primärstromes oder der dem Primärstrom entsprechenden primärseitigen Zustandsgröße in Abhängigkeit von der Ausgangsspannung korrigiert. Die Ausgangsspannung ist ein Maß für die Schweißspannung zwischen der Schweißelektrode und dem Werkstück. Die Ausgangsspannung ist vom Lichtbogenwiderstand abhängig und durch Erfassen der Ausgangsspannung kann der Schweißprozess besser kontrolliert werden. Es kann beispielsweise vorgesehen sein, dass man mittels einer Spannungs-Auswerteschaltung auf der Grundlage der erfassten Ausgangsspannung ein Signal bereitstellt, das in die Korrektur des erfassten Wertes des Primärstromes oder der dem Primärstrom entsprechenden primärseitigen Zustandsgröße einfließt.

Von Vorteil ist es, wenn der Benutzer die Möglichkeit hat, einen bestimmten Schweißstrom vorzugeben. Dieser bildet den Sollwert einer Regelung, deren Istwert sich aus dem korrigierten Wert des Primärstromes oder der dem Primärstrom entsprechenden primärseitigen Zustandsgröße ergibt.

Wie eingangs erwähnt, betrifft die Erfindung auch die Ausgestaltung einer Schweißstromquelle zur Durchführung des voran stehend erläuterten Verfahrens. Die Schweißstromquelle umfasst einen Stromwandler mit den Merkmalen von Patentanspruch 9.

Die Schweißstromquelle zeichnet sich insbesondere dadurch aus, dass lediglich der Primärstrom oder eine dem Primärstrom entsprechende primärseitige Zustandsgröße, nicht aber auch der Sekundärstrom erfassbar sind. Dies ermöglicht eine sehr kostengünstige und verlustleistungslose Ausgestaltung. Allein durch die Regelung des Primärstromes oder einer dem Primärstrom entsprechenden primärseitigen Zustandsgröße kann sichergestellt werden, dass sich der Schweißstrom in Abhängigkeit vom Lichtbogenwiderstand ändert, so dass bei einem Kurzschluss im Lichtbogen der Schweißstrom seinen höchsten, durch die Vorgabe des Primärstromes oder der dem Primärstrom entsprechenden primärseitigen Zustandsgröße begrenzten Wert einnimmt, und dass sich der Schweißstrom mit zunehmendem Lichtbogenwiderstand verringert.

Die Brückenschaltung der Schweißstromquelle kann als Vollbrücke oder auch als Halbbrücke ausgestaltet sein.

Die Schweißstromquelle umfasst eine erste Auswerteschaltung zur Erfassung der Amplitude und der Frequenz des Primärstromes oder der dem Primärstrom entsprechenden primärseitigen Zustandsgröße. Wie bereits dargelegt, handelt es sich bei der Frequenz des Primärstromes oder der dem Primärstrom entsprechenden primärseitigen Zustandsgröße um die Resonanzfrequenz der Schweißstromquelle und diese Resonanzfrequenz ist abhängig vom Lichtbogenwiderstand. Eine Erfassung der Resonanzfrequenz ermöglicht es somit, das Vorliegen eines Kurzschlusses zwischen der Schweißelektrode und dem Werkstück innerhalb sehr kurzer Zeit zu erkennen, so dass der maximale Schweißstrom begrenzt werden kann und folglich Spritzer beim Werkstoffübergang vermieden werden können.

Günstigerweise umfasst die Schweißstromquelle eine Korrekturschaltung zur Bildung eines Korrekturwertes für den Primärstrom oder für die dem Primärstrom entsprechende primärseitige Zustandsgröße in Abhängigkeit von der Resonanzfrequenz. Die Resonanzfrequenz bildet ein Maß für die Differenz zwischen dem Sekundärstrom, der proportional ist zum Primärstrom, und dem Schweißstrom, der von der Schweißelektrode zum Werkstück fließt. In Abhängigkeit von der Resonanzfrequenz kann der Primärstrom oder eine dem Primärstrom entsprechende primärseitige Zustandsgröße korrigiert werden, um die Abweichung zwischen dem Sekundärstrom und dem Schweißstrom zu berücksichtigen.

Wie bereits erläutert, kann aus der Resonanzfrequenz bei vorgegebener Kapazität des parallelen Schwingkreises der Lichtbogenwiderstand berechnet werden. Von besonderem Vorteil ist es jedoch, wenn die Schweißstromquelle ein Speicherglied aufweist zum Abspeichern von Werten der Resonanzfrequenz sowie des Phasenwinkels zwischen dem Sekundärstrom des Stromwandlers und dem Schweißstrom in Abhängigkeit vom Lichtbogenwiderstand. Dies ermöglicht es, die einer erfassten Resonanzfrequenz zugeordneten Werte des Lichtbogenwiderstandes und des Phasenwinkels unmittelbar dem Speicherglied zu entnehmen und zur Korrektur des Primärstromes oder der dem Primärstrom entsprechenden primärseitigen Zustandsgröße heranzuziehen. Dies wiederum erlaubt eine sehr schnelle Regelung des Schweißprozesses, so dass Spritzer beim Werkstoffübergang vermieden werden können.

Bei einer vorteilhaften Ausgestaltung der erfindungsgemäßen Schweißstromquelle weist diese ein Verknüpfungsglied auf zur Verknüpfung des erfassten Wertes des Primärstromes oder der dem Primärstrom entsprechenden primärseitigen Zustandsgröße mit einem Korrekturwert. Mit Hilfe des Verknüpfungsgliedes kann beispielsweise das Produkt aus dem erfassten Wert des Primärstromes oder der dem Primärstrom entsprechenden primärseitigen Zustandsgröße und dem Kosinus des Phasenwinkels gebildet werden. Dieses Produkt stellt unter Berücksichtigung des Übersetzungsverhältnisses des Stromwandlers ein Maß dar für den Schweißstrom und kann somit den Istwert einer Schweißstromregelung bilden.

Bevorzugt ist mittels des Stromreglers der Steuereinheit ein Steuersignal bereitstellbar in Abhängigkeit von einem Vergleich des korrigierten Wertes des Primärstromes oder der dem Primärstrom entsprechenden primärseitigen Zustandsgröße mit einem vom Benutzer vorgebbaren Wert des Schweißstromes.

Die Schweißstromquelle weist bei einer vorteilhaften Ausgestaltung eine zweite Auswerteschaltung auf zur Erfassung der Ausgangsspannung des Gleichrichters, wobei die zweite Auswerteschaltung mit der Korrekturschaltung verbunden ist. Wie bereits erläutert, kann die zweite Auswerteschaltung der Korrekturschaltung ein Signal bereitstellen, das in die Korrektur des erfassten Wertes des Primärstromes oder der dem Primärstrom entsprechenden primärseitigen Zustandsgröße einfließt.

Von besonderem Vorteil ist es, wenn die Schweißstromquelle ein Dynamikmodul aufweist zur Bearbeitung des von der Korrekturschaltung bereitgestellten Korrekturwertes. Das Dynamikmodul ist der Korrekturschaltung nachgeordnet und ermöglicht es, dynamische Vorgänge des Schweißprozesses in die Regelung des Schweißstromes mit einzubeziehen. Derartige Dynamikmodule sind dem Fachmann an sich bekannt. Sie sind beispielsweise in der DE-A-32 00 086 A1 beschrieben.

Die nachfolgende Beschreibung einer bevorzugten Ausführungsform der Erfindung dient im Zusammenhang mit der Zeichnung der näheren Erläuterung. Es zeigen:
- Figur 1:: ein Blockschaltbild einer erfindungsgemäßen Schweißstromquelle;
- Figur 2:: eine schematische Darstellung des Verlaufs der Resonanzfrequenz, des Primärstromes und des Fehlerstromes der Schweiß- stromquelle sowie des Schweißstromes in Abhängigkeit vom Widerstand eines Lichtbogens und
- Figur 3:: eine schematische Darstellung des Verlaufs der Resonanzfrequenz sowie des Phasenwinkels zwischen dem Sekundärstrom der Schweißstromquelle und dem Schweißstrom in Abhängigkeit vom Widerstand des Lichtbogens.

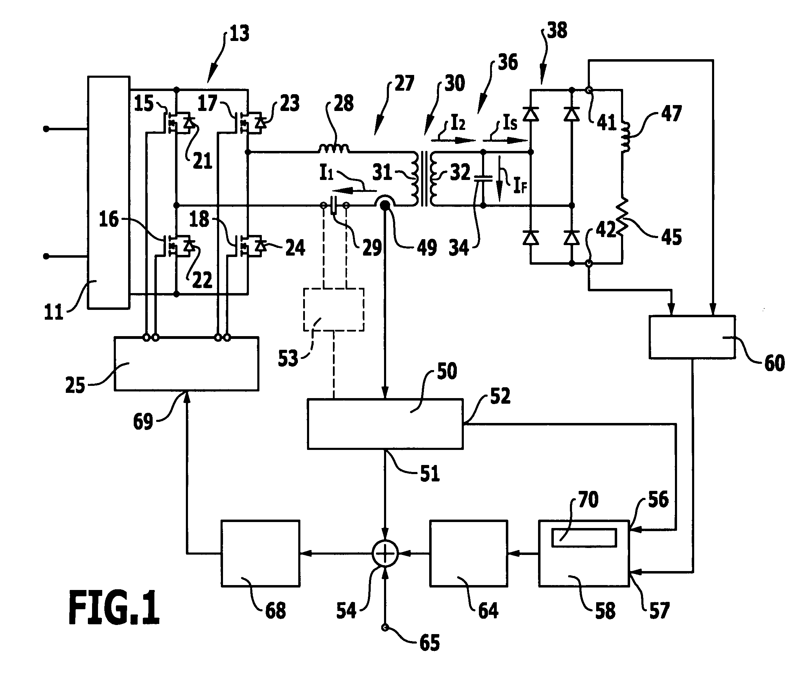

In Figur 1 ist schematisch ein vereinfachtes Blockschaltbild einer erfindungsgemäßen Schweißstromquelle dargestellt. Diese umfasst einen eingangsseitigen Gleichrichter 11, der in üblicher und aus der Zeichnung nicht ersichtlicher Weise an ein Spannungsversorgungsnetz, insbesondere an ein öffentliches Spannungsversorgungsnetz, wie beispielsweise ein Wechselspannungsnetz mit 230 V oder 400 V angeschlossen werden kann. Im eingangsseitigen Gleichrichter 11 wird die vom Spannungsversorgungsnetz bereitgestellte Wechselspannung gleichgerichtet.

Der eingangsseitige Gleichrichter 11 ist mit einer Brückenschaltung 13 verbunden und versorgt diese mit Gleichspannung. Im dargestellten Ausführungsbeispiel ist die Brückenschaltung 13 als Vollbrücke ausgebildet und weist vier Schaltelemente 15, 16, 17, 18 mit zugeordneten Freilaufdioden 21, 22, 23, 24 auf. Derartige Brückenschaltungen 13 sind dem Fachmann an sich bekannt und bedürfen daher vorliegend keiner näheren Erläuterung. Alternativ könnte die Brückenschaltung 13 auch als Halbbrücke mit nur zwei Schaltelementen und nur zwei Freilaufdioden ausgestaltet sein.

Die Steuerung der Brückenschaltung 13 erfolgt mittels einer Steuereinheit 25, die die Schaltelemente 15, 16, 17, 18 ansteuert, so dass die Brückenschaltung 13 eine Wechselspannung bereitstellt mit einer variablen Frequenz und mit einer variablen Pulsbreite.

Der Brückenschaltung 13 nachgeordnet ist ein serieller Schwingkreis 27 mit einer seriellen Induktivität 28 und einer seriellen Kapazität 29, die an die Primärseite eines Spannungswandlers in Form eines Transformators 30 angeschlossen sind. Die Primärspule 31 des Transformators ist in den seriellen Schwingkreis 27 eingebunden. Parallel zur Sekundärspule 32 des Transformators 30 ist eine parallele Kapazität 34 geschaltet, die in Kombination mit der Sekundärspule 32 einen parallelen Schwingkreis 36 ausbildet. Der parallele Schwingkreis 36 ist somit auf der Sekundärseite des Transformators 30 angeordnet wohingegen der serielle Schwingkreis 27 auf der Primärseite des Transformators 30 angeordnet ist.

An den parallelen Schwingkreis 36 schließt sich ein ausgangsseitiger Gleichrichter 38 an, der die vom seriellen Schwingkreis 36 bereitgestellte Wechselspannung gleichrichtet und dessen Ausgangsspannung an den Ausgangsklemmen 41, 42 der Schweißstromquelle anliegt.

Über die Ausgangsklemmen 41, 42 kann in üblicher Weise ein Schweißprozess mit Energie versorgt werden. Der Schweißprozess ist in der Ersatzschaltung gemäß Figur 1 durch einen Lichtbogenwiderstand 45 dargestellt, der in Reihe geschaltet ist zu einer Glättungsinduktivität 47. Der Lichtbogenwiderstand 45 stellt den Widerstand des Lichtbogens dar, der zwischen einer Schweißelektrode und dem zu schweißenden Werkstück zündet. Er ändert sich im Laufe der Zeit, denn beim Werkstoffübergang von der Schweißelektrode zum Werkstück kann es zu einem bestimmten Zeitpunkt zur Ausbildung eines Kurzschlusses kommen, so dass der Lichtbogenwiderstand sehr gering ist und der über den Lichtbogenwiderstand fließende Schweißstrom ein sehr hohen Wert einnimmt, und zu einem späteren Zeitpunkt kann der Lichtbogenwiderstand einen höheren Wert aufweisen und der Schweißstrom kann kleiner sein.

Zur Regelung des über den Lichtbogenwiderstand 45 fließenden Schweißstromes weist die in Figur 1 dargestellte Schweißstromquelle einen Stromaufnehmer 49 auf, der an eine erste Auswerteschaltung 50 angeschlossen ist. Die Auswerteschaltung 50 erfasst die Amplitude und die Frequenz des Primärstromes I₁, d. h. des Stromes, der über die serielle Induktivität 28, die Primärspule 31 und die serielle Kapazität 29 fließt. Über einen ersten Ausgang 51 gibt die erste Auswerteschaltung 50 ein der Amplitude des Primärstromes I₁ entsprechendes Signal an ein Verknüpfungsglied 54, und über einen zweiten Ausgang 52 gibt die Auswerteschaltung 50 ein der Frequenz des Primärstromes entsprechendes Signal an einen ersten Eingang 56 einer Korrekturschaltung 58. Über einen zweiten Eingang 57 steht die Korrekturschaltung 58 mit einer zweiten Auswerteschaltung 60 in elektrischer Verbindung, die die an den Ausgangsklemmen 41, 42 anliegende Ausgangsspannung der Schweißstromquelle abgreift und auswertet.

Alternativ könnte mittels eines Spannungserfassungsglieds 53 auch die Spannung erfasst werden, die an der seriellen Kapazität 29 abfällt. Das Spannungserfassungsglied 53 könnte an die erste Auswerteschaltung 50 angeschlossen sein, die dann über den ersten Ausgang 51 ein der Amplitude der erfassten Spannung entsprechendes Signal ausgibt und die über den zweiten Ausgang 52 ein der Frequenz der erfassten Spannung entsprechendes Signal ausgibt. Dies ist in Figur 1 gestrichelt dargestellt. Die über die serielle Kapazität 29 abfallende Spannung ist abhängig vom Primärstrom I₁ und stellt eine dem Primärstrom I₁ entsprechende primärseitige Zustandsgröße dar, die als Alternative und/oder ergänzend zum Primärstrom I₁ ausgewertet und als Ist-Wert für eine Regelung herangezogen werden könnte. Im Folgenden wird die Regelung am Beispiel der Primärstromerfassung erläutert, sie könnte in entsprechender Weise aber auch durch Erfassung der an der seriellen Kapazität 29 abfallenden Spannung erfolgen.

Der Korrekturschaltung 58 nachgeordnet ist ein Dynamikmodul 64, dessen Ausgang ebenfalls an das Verknüpfungsglied 54 angeschlossen ist.

Über einen Sollwerteingang 65 kann dem Verknüpfungsglied 54 ein Sollwert des über den Lichtbogenwiderstand 45 fließenden Schweißstromes Iₛ eingegeben werden.

Das Verknüpfungsglied 54 ist mit einem Stromregler 68 verbunden, der über einen Steuereingang 69 der Steuereinheit 25 ein Steuersignal zur Ansteuerung der Brückenschaltung 13 bereitstellt. Der Stromregler 68 ist in der dargestellten Ausführungsform als PI-Regler ausgestaltet.

Während des Betriebes der Schweißstromquelle fließt über die serielle Induktivität 28, die Primärspule 31 und die serielle Kapazität 49 der Primärstrom I₁. Es handelt sich hierbei um einen Wechselstrom, der mittels des Stromaufnehmers 49 auf einfache Weise erfasst werden kann. Der Primärstrom Induziert in der Sekundärspule 32 einen Sekundärstrom I₂, dessen Größe durch das Übersetzungsverhältnis des Transformators 30 vorgegeben ist. Der Sekundärstrom I₂ teilt sich auf in den über den Lichtbogenwiderstand 45 fließenden Schweißstrom Iₛ und den über die parallele Kapazität 34 fließenden Fehlerstrom I_{F}. Zwischen dem Sekundärstrom I₂ und dem Schweißstrom Iₛ liegt eine Phasenverschiebung mit einem Phasenwinkel Φ vor, dessen Größe vom Lichtbogenwiderstand 45 sowie von der parallelen Kapazität 34 und der Resonanzfrequenz der Schweißstromquelle abhängig ist. Im Falle eines Kurzschlusses, d. h. bei sehr geringem Lichtbogenwiderstand 45, fließt praktisch der gesamte Sekundärstrom I₂ über den Lichtbogenwiderstand 45 und der Phasenwinkel beträgt 0°. Liegt allerdings ein endlicher Lichtbogenwiderstand 45 vor, so fließt ein Teil des Sekundärstromes I₂ als Fehlerstrom I_{F} über die parallele Kapazität 34.

Mittels der Strom-Auswerteschaltung 50 werden die Amplitude und die Frequenz des Primärstromes I₁ bestimmt. Die Frequenz des Primärstromes I₁ ist identisch mit der Resonanzfrequenz ω der Schweißstromquelle. Die Resonanzfrequenz ω ist vom Lichtbogenwiderstand 45 abhängig. Dasselbe gilt auch für die an den Ausgangsklemmen 41, 42 anliegende Ausgangsspannung, auch diese ist vom Lichtbogenwiderstand 45 abhängig. Bei Vorliegen eines Kurzschlusses zwischen der Schweißelektrode und dem zu schweißenden Werkstück bricht die Ausgangsspannung kurzzeitig zusammen.

Die Regelung des Schweißstromes Iₛ erfolgt auf Basis des erfassten Primärstromes I₁, wobei der erfasste Wert in Abhängigkeit von der Resonanzfrequenz ω und in Abhängigkeit von der Ausgangsspannung des ausgangsseitigen Gleichrichters 38 korrigiert wird.

Zur Korrektur des Primärstromes wird aus einem Speicherglied 70 der Korrekturschaltung 58 der bei einer vorgegebenen Dimensionierung der Schweißstromquelle der erfassten Resonanzfrequenz ω entsprechende Wert des Phasenwinkels Φ zwischen dem Sekundärstrom I₂ und dem Schweißstrom I_{S} einer Tabelle entnommen. In die Korrektur des Primärstromwertes fließt zusätzlich auch noch die an den Ausgangsklemmen 41 und 42 anliegende Ausgangsspannung mit ein und ein entsprechender Korrekturwert wird dann dem Dynamikmodul 64 eingegeben, das dynamische Effekte des Schweißprozesses berücksichtigt und aus dem Korrekturwert einen Faktor berechnet, mit dem der Primärstromwert multipliziert wird. Der korrigierte Primärstromwert wird dann mit dem am Sollwerteingang 65 anliegenden Schweißstrom verglichen und mittels des Stromreglers 68 wird dann ein Steuersignal für die Brückenschaltung 13 gebildet, so dass diese dem seriellen Schwingkreis 27 eine Wechselspannung bereitstellt, die einen Primärstrom zur Folge hat, der unter Berücksichtigung des Übersetzungsverhältnisses des Transformators 30 und des aktuellen Phasenwinkels Φ den gewünschten Schweißstrom vorgibt.

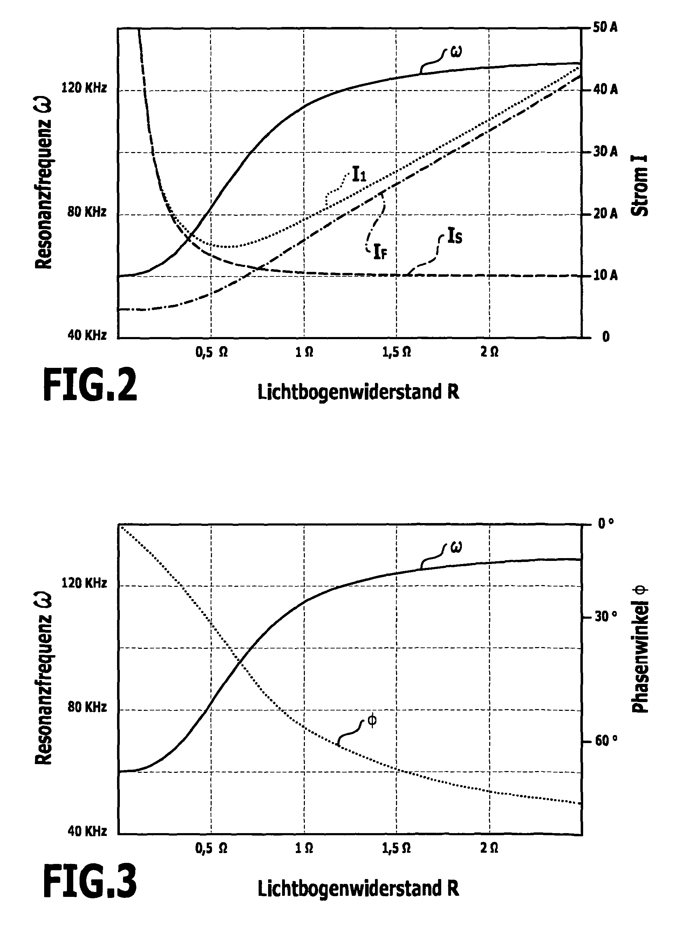

Die Abhängigkeit der Resonanzfrequenz ω, des Primärstromes I₁, des Schweißstromes Iₛ sowie des über die parallele Kapazität 34 fließenden Fehlerstromes I_{F} ist in Figur 2 veranschaulicht. Die Resonanzfrequenz ω weist eine nicht lineare Abhängigkeit vom Lichtbogenwiderstand 45 auf. Im niederohmigen Bereich, also in Zuständen, bei denen praktisch ein Kurzschluss zwischen der Schweißelektrode und dem zu schweißenden Werkstück vorliegt, weist die Resonanzfrequenz einen Wert auf, der ungefähr halb so groß ist wie bei endlichen Widerständen des Lichtbogens. In Bereichen von etwa 0,3 bis 0,7 Ohm liegt eine sehr starke Änderung der Resonanzfrequenz ω vor, die Resonanzfrequenz ω bildet somit ein Maß für den Lichtbogenwiderstand 45 und damit für den Schweißprozess.

Die in Figur 2 dargestellten Stromverläufe machen deutlich, dass der Schweißstrom Iₛ bei einem sehr niederohmigen Lichtbogen, also insbesondere im Falle eines Kurzschlusses zwischen der Schweißelektrode und dem Werkstück, praktisch dem Sekundärstrom I₂ entspricht, da der Fehlerstrom I_{F} sehr gering ist, wohingegen bei größeren Widerstandswerten des Lichtbogens eine deutliche Abweichung zwischen dem Schweißstrom Iₛ und dem Sekundärstrom vorliegt. In diesen Bereichen steigt der über die parallele Kapazität 34 fließende Fehlerstrom I_{F} praktisch linear an.

Aus Figur 3 wird der Verlauf des Phasenwinkels Φ zwischen dem Sekundärstrom I₂ und dem Schweißstrom Iₛ in Abhängigkeit vom Lichtbogenwiderstand 45 deutlich. Im Falle eines Kurzschlusses beträgt der Phasenwinkel praktisch 0°, d. h. der Sekundärstrom I₂ ist identisch mit dem Schweißstrom Iₛ. Bei höheren Widerstandswerten des Lichtbogens weist der Phasenwinkel Φ dagegen Werte bis nahezu 90° auf, in diesen Fällen fließt der Sekundärstrom I₂ im Wesentlichen über die Parallelkapazität 34 und nur ein sehr geringer Anteil des Sekundärstromes I₂ fließt über den Lichtbogen.

Die Erfassung der Amplitude und der Frequenz des Primärstromes oder einer dem Primärstrom entsprechenden primärseitigen Zustandsgröße (beispielsweise Amplitude und Frequenz der an der seriellen Kapazität 29 abfallenden Spannung) ermöglicht somit Aussagen über den Schweißprozess, insbesondere über das Vorliegen eines Kurzschlusses, so dass einer unzulässigen Erhöhung des Schweißstromes durch Regelung des Primärstromes oder der diesem entsprechenden primärseitigen Zustandsgröße innerhalb sehr kurzer Zeit entgegengewirkt werden kann. Dies ermöglicht es insbesondere, Spritzer beim Werkstoffübergang zwischen der Schweißelektrode und dem Werkstück zu vermeiden.

## Patentansprüche

1. Verfahren zum Regeln einer Schweißstromquelle mit einem Stromwandler (30), der primärseitig einen seriellen Schwingkreis (27) und sekundärseitig einen parallelen Schwingkreis (36) aufweist, wobei der serielle Schwingkreis (27) von einer Brückenschaltung (13) mit einer variablen Wechselspannung versorgt wird und der parallele Schwingkreis (36) über einen Gleichrichter (38) einem Schweißprozess Energie bereitstellt, wobei eine Steuereinheit (25) die Brückenschaltung (13) in Abhängigkeit von mindestens einer Zustandsgröße der Schweißstromquelle steuert, und wobei man als Strom-Zustandsgröße der Schweißstromquelle lediglich den Primärstrom oder eine dem Primärstrom entsprechende primärseitige Zustandsgröße erfasst und der Steuereinheit (25) ein vom Primärstrom oder von der diesem entsprechenden primärseitigen Zustandsgröße abhängiges Steuersignal zuführt, **dadurch gekennzeichnet, dass** man als weitere Zustandsgröße die Resonanzfrequenz der Schweißstromquelle erfasst und zur Bildung eines Steuersignals für die Steuereinheit (25) den Wert des erfassten Primärstromes oder der diesem entsprechenden primärseitigen Zustandsgröße in Abhängigkeit von der Resonanzfrequenz korrigiert.

2. Verfahren nach Anspruch 1, **dadurch gekennzeichnet, dass** man den Primärstrom oder eine dem Primärstrom entsprechende primärseitige Zustandsgröße auf eine gleich bleibende Amplitude regelt.

3. Verfahren nach Anspruch 1 oder 2, **dadurch gekennzeichnet, dass** man aus der erfassten Resonanzfrequenz den Lichtbogenwiderstand (45) des Schweißprozesses bestimmt und den erfassten Wert des Primärstromes oder der diesem entsprechenden primärseitigen Zustandsgröße in Abhängigkeit vom Lichtbogenwiderstand (45) korrigiert.

4. Verfahren nach Anspruch 1, 2 oder 3, **dadurch gekennzeichnet, dass** man aus der erfassten Resonanzfrequenz den Phasenwinkel zwischen dem Sekundärstrom des Stromwandlers (30) und dem Schweißstrom bestimmt und den erfassten Wert des Primärstromes oder der diesem entsprechenden primärseitigen Zustandsgröße in Abhängigkeit vom Phasenwinkel korrigiert.

5. Verfahren nach Anspruch 3 oder 4, **dadurch gekennzeichnet, dass** man für eine vorgegebene Dimensionierung der Schweißstromquelle Tabellenwerte der Resonanzfrequenz und des Phasenwinkels in Abhängigkeit vom Lichtbogenwiderstand (45) in einem Speicherglied hinterlegt und für einen erfassten Wert der Resonanzfrequenz den zugeordneten Wert des Lichtbogenwiderstandes (45) und/oder des Phasenwinkels aus dem Speicherglied zur Korrektur des erfassten Wertes des Primärstromes oder der diesem entsprechenden primärseitigen Zustandsgröße abruft.

6. Verfahren nach Anspruch 4 oder 5, **dadurch gekennzeichnet, dass** man den erfassten Wert des Primärstromes oder der diesem entsprechenden primärseitigen Zustandsgröße mit dem Kosinus des Phasenwinkels multipliziert.

7. Verfahren nach einem der voranstehenden Ansprüche, **dadurch gekennzeichnet, dass** man als weitere Zustandsgröße die am Ausgang des Gleichrichters (38) anliegende Ausgangsspannung der Schweißstromquelle erfasst und zur Bildung eines Steuersignals für die Steuereinheit (25) den Wert des erfassten Primärstromes oder der diesem entsprechenden primärseitigen Zustandsgröße in Abhängigkeit von der Ausgangsspannung korrigiert.

8. Verfahren nach einem der voranstehenden Ansprüche, **dadurch gekennzeichnet, dass** man den korrigierten Wert des Primärstromes oder der diesem entsprechenden primärseitigen Zustandsgröße als Istwert in eine Regelung eingibt, deren Sollwert in Form des Schweißstroms vom Benutzer vorgebbar ist.

9. Schweißstromquelle zur Durchführung des Verfahrens nach einem der voranstehenden Ansprüche, mit einem Stromwandler (30), der primärseitig einen seriellen Schwingkreis (27) und sekundärseitig einen parallelen Schwingkreis (36) aufweist, und mit einer Brückenschaltung (13), die dem seriellen Schwingkreis (27) eine variable Wechselspannung bereitstellt, sowie mit einem Gleichrichter (38), der an den parallelen Schwingkreis (36) angeschlossen ist zur Abgabe von Energie an einen Schweißprozess, und mit einer Steuereinheit (25) zur Steuerung der Brückenschaltung (13) in Abhängigkeit von mindestens einer Zustandsgröße der Schweißstromquelle, wobei als Strom-Zustandsgröße der Schweißstromquelle lediglich der Primärstrom des Stromwandlers (30) oder eine dem Primärstrom entsprechende primärseitige Zustandsgröße erfassbar ist und wobei die Schweißstromquelle einen Regler (68) aufweist zur Bereitstellung eines Steuersignals für die Steuereinheit (25) in Abhängigkeit vom Primärstrom oder von der dem Primärstrom entsprechenden Zustandsgröße, **dadurch gekennzeichnet, dass** die Schweißstromquelle eine erste Auswerteschaltung (50) aufweist zur Erfassung der Amplitude und der Frequenz des Primärstromes oder der dem Primärstrom entsprechenden primärseitigen Zustandsgröße.

10. Schweißstromquelle nach Anspruch 9, **dadurch gekennzeichnet, dass** die Schweißstromquelle eine Korrekturschaltung (58) aufweist zur Bildung eines Korrekturwertes für den erfassten Primärstrom oder für die dem Primärstrom entsprechende primärseitige Zustandsgröße in Abhängigkeit von der Resonanzfrequenz.

11. Schweißstromquelle nach Anspruch 10, **dadurch gekennzeichnet, dass** die Schweißstromquelle ein Speicherglied (70) aufweist zum Abspeichern von Werten der Resonanzfrequenz sowie des Phasenwinkels zwischen dem Sekundärstrom des Stromwandlers (30) und dem Schweißstrom in Abhängigkeit vom Lichtbogenwiderstand (45).

12. Schweißstromquelle nach Anspruch 10 oder 11, **dadurch gekennzeichnet, dass** die Schweißstromquelle ein Verknüpfungsglied (54) aufweist zur Verknüpfung des erfassten Wertes des Primärstromes oder der dem Primärstrom entsprechenden primärseitigen Zustandsgröße mit einem Korrekturwert.

13. Schweißstromquelle nach Anspruch 12, **dadurch gekennzeichnet, dass** mittels des Reglers (68) der Steuereinheit (25) ein Steuersignal bereitstellbar ist in Abhängigkeit von einem Vergleich des korrigierten Wertes des Primärstromes oder der dem Primärstrom entsprechenden primärseitigen Zustandsgröße mit einem vom Benutzer vorgebbaren Sollwert des Schweißstromes.

14. Schweißstromquelle nach einem der Ansprüche 10 bis 13, **dadurch gekennzeichnet, dass** die Schweißstromquelle eine zweite Auswerteschaltung (60) aufweist zur Erfassung der Ausgangsspannung des Gleichrichters (38), wobei die zweite Auswerteschaltung (60) mit der Korrekturschaltung (58) verbunden ist.

15. Schweißstromquelle nach einem der Ansprüche 10 bis 14, **dadurch gekennzeichnet, dass** die Schweißstromquelle ein Dynamikmodul (64) aufweist zur Bearbeitung des von der Korrekturschaltung (58) bereitgestellten Korrekturwertes.

## Claims

1. Method for regulating a welding current source with a current transformer (30), which has a series resonant circuit (27) on the primary side and a parallel resonant circuit (36) on the secondary side, the series resonant circuit (27) being supplied with a variable alternating voltage by a bridge circuit (13) and the parallel resonant circuit (36) providing energy to a welding process by way of a rectifier (38), wherein a control unit (25) controls the bridge circuit (13) in dependence on at least one state variable of the welding current source, and wherein only the primary current or a state variable on the primary side corresponding to the primary current is recorded as the electrical-current state variable of the welding current source and a control signal dependent on the primary current or on the state variable on the primary side corresponding thereto is fed to the control unit (25), **characterized in that** the resonant frequency of the welding current source is recorded as a further state variable and the value of the recorded primary current or of the state variable on the primary side corresponding thereto is corrected in dependence on the resonant frequency to form a control signal for the control unit (25).

2. Method according to claim 1, **characterized in that** the primary current or a state variable on the primary side corresponding to the primary current is regulated to a constant amplitude.

3. Method according to claim 1 or 2, **characterized in that** the arc resistance (45) of the welding process is determined from the recorded resonant frequency and the recorded value of the primary current or of the state variable on the primary side corresponding thereto is corrected in dependence on the arc resistance (45).

4. Method according to claim 1, 2 or 3, **characterized in that** the phase angle between the secondary current of the current transformer (30) and the welding current is determined from the recorded resonant frequency and the recorded value of the primary current or of the state variable on the primary side corresponding thereto is corrected in dependence on the phase angle.

5. Method according to claim 3 or 4, **characterized in that**, for a predetermined dimensioning of the welding current source, tabular values of the resonant frequency and of the phase angle in dependence on the arc resistance (45) are stored in a memory element and, for a recorded value of the resonant frequency, the associated value of the arc resistance (45) and/or of the phase angle is called up from the memory element for the correction of the recorded value of the primary current or of the state variable on the primary side corresponding thereto.

6. Method according to claim 4 or 5, **characterized in that** the recorded value of the primary current or of the state variable on the primary side corresponding thereto is multiplied by the cosine of the phase angle.

7. Method according to one of the preceding claims, **characterized in that** the output voltage of the welding current source that is present at the output of the rectifier (38) is recorded as a further state variable and the value of the recorded primary current or of the state variable on the primary side corresponding thereto is corrected in dependence on the output voltage to form a control signal for the control unit (25).

8. Method according to one of the preceding claims, **characterized in that** the corrected value of the primary current or of the state variable on the primary side corresponding thereto is input as an actual value into a regulating process, the setpoint value of which can be predetermined by the user in the form of the welding current.

9. Welding current source for carrying out the method according to one of the preceding claims, with a current transformer (30), which has a series resonant circuit (27) on the primary side and a parallel resonant circuit (36) on the secondary side, and with a bridge circuit (13), which provides the series resonant circuit (27) with a variable alternating voltage, as well as with a rectifier (38), which is connected to the parallel resonant circuit (36) for delivering energy to a welding process, and with a control unit (25) for controlling the bridge circuit (13) in dependence on at least one state variable of the welding current source, only the primary current of the current transformer (30) or a state variable on the primary side corresponding to the primary current being recordable as the electrical-current state variable of the welding current source, and the welding current source having a regulator (68) for providing a control signal for the control unit (25) in dependence on the primary current or on the state variable corresponding to the primary current, **characterized in that** the welding current source has a first evaluation circuit (50) for recording the amplitude and the frequency of the primary current or of the state variable on the primary side corresponding to the primary current.

10. Welding current source according to claim 9, **characterized in that** the welding current source has a correction circuit (58) for forming a correction value for the recorded primary current or for the state variable on the primary side corresponding to the primary current in dependence on the resonant frequency.

11. Welding current source according to claim 10, **characterized in that** the welding current source has a memory element (70) for storing values of the resonant frequency and of the phase angle between the secondary current of the current transformer (30) and the welding current in dependence on the arc resistance (45).

12. Welding current source according to claim 10 or 11, **characterized in that** the welding current source has a combinational element (54) for combining the recorded value of the primary current or of the state variable on the primary side corresponding to the primary current with a correction value.

13. Welding current source according to claim 12, **characterized in that** the control unit (25) can be provided with a control signal by means of the regulator (68) in dependence on a comparison of the corrected value of the primary current or of the state variable on the primary side corresponding to the primary current with a setpoint value of the welding current that can be predetermined by the user.

14. Welding current source according to one of claims 10 to 13, **characterized in that** the welding current source has a second evaluation circuit (60) for recording the output voltage of the rectifier (38), the second evaluation circuit (60) being connected to the correction circuit (58).

15. Welding current source according to one of claims 10 to 14, **characterized in that** the welding current source has a dynamic module (64) for processing the correction value provided by the correction circuit (58).

## Revendications

1. Procédé pour réguler une source de courant de soudage comprenant un transformateur d'intensité (30), qui présente, côté primaire, un circuit oscillant série (27), et, côté secondaire, un circuit oscillant parallèle (36), source de courant de soudage
dans laquelle le circuit oscillant série (27) est alimenté par un circuit en pont (13) avec une tension alternative variable, et le circuit oscillant parallèle (36) fournit de l'énergie à un processus de soudage par l'intermédiaire d'un redresseur (38),
dans laquelle une unité de commande (25) commande le circuit en pont (13) en fonction d'au moins une grandeur d'état de la source de courant de soudage,
et dans laquelle on relève en tant que grandeur d'état de courant de la source de courant de soudage, uniquement le courant primaire ou une grandeur d'état côté primaire, correspondant au courant primaire, et l'on transmet à l'unité de commande (25) un signal de commande fonction du courant primaire ou de la grandeur d'état côté primaire correspondant à celui-ci,
**caractérisé en ce que** l'on relève, en guise de grandeur d'état supplémentaire, la fréquence de résonance de la source de courant de soudage, et pour former un signal de commande pour l'unité de commande (25), on corrige la valeur relevée du courant primaire ou de la grandeur d'état côté primaire, qui lui correspond, en fonction de la fréquence de résonance.

2. Procédé selon la revendication 1, **caractérisé en ce que** l'on régule le courant primaire ou une grandeur d'état côté primaire, qui lui correspond, à une amplitude restant identique.

3. Procédé selon la revendication 1 ou la revendication 2, **caractérisé en ce que** l'on détermine, à partir de la fréquence de résonance relevée, la résistance d'arc électrique (45) du processus de soudage, et l'on corrige la valeur relevée du courant primaire ou de la grandeur d'état côté primaire, qui lui correspond, en fonction de la résistance d'arc électrique (45).

4. Procédé selon la revendication 1, 2 ou la revendication 3, **caractérisé en ce que** l'on détermine, à partir de la fréquence de résonance relevée, l'angle de phase entre le courant secondaire du transformateur d'intensité (30) et le courant de soudage, et l'on corrige la valeur relevée du courant primaire ou de la grandeur d'état côté primaire, qui lui correspond, en fonction de l'angle de phase.

5. Procédé selon la revendication 3 ou la revendication 4, **caractérisé en ce que** pour un dimensionnement prédéterminé de la source de courant de soudage, on stocke dans un organe de mémoire, sous forme de table, des valeurs de la fréquence de résonance et de l'angle de phase en fonction de la résistance d'arc électrique (45), et, pour une valeur relevée de la fréquence de résonance, on appelle dans l'organe de mémoire, la valeur associée de la résistance d'arc électrique (45) et/ou de l'angle phase, pour corriger la valeur relevée du courant primaire ou de la grandeur d'état côté primaire, qui lui correspond.

6. Procédé selon la revendication 4 ou la revendication 5, **caractérisé en ce que** l'on multiplie la valeur relevée du courant primaire ou de la grandeur d'état côté primaire, qui lui correspond, par le cosinus de l'angle de phase.

7. Procédé selon l'une des revendications précédentes, **caractérisé en ce que** l'on relève, en guise de grandeur d'état supplémentaire, la tension de sortie de la source de courant de soudage, qui est appliquée à la sortie du redresseur (38), et pour former un signal de commande pour l'unité de commande (25), on corrige la valeur relevée du courant primaire ou de la grandeur d'état côté primaire, qui lui correspond, en fonction de la tension de sortie.

8. Procédé selon l'une des revendications précédentes, **caractérisé en ce que** l'on introduit la valeur corrigée du courant primaire ou de la grandeur d'état côté primaire, qui lui correspond, en guise de valeur instantanée, dans un système de régulation dont la valeur de consigne peut être prescrite par l'utilisateur sous la forme du courant de soudage.

9. Source de courant de soudage pour la mise en oeuvre du procédé selon l'une des revendications précédentes, comprenant un transformateur d'intensité (30), qui présente, côté primaire, un circuit oscillant série (27), et, côté secondaire, un circuit oscillant parallèle (36), et comprenant également un circuit en pont (13), qui fournit une tension alternative variable au circuit oscillant série (27), ainsi qu'un redresseur (38), qui est raccordé au circuit oscillant parallèle (36) pour délivrer de l'énergie à un processus de soudage, et comprenant en outre une unité de commande (25) pour commander le circuit en pont (13) en fonction d'au moins une grandeur d'état de la source de courant de soudage, source de courant de soudage dans laquelle il est possible de relever, en tant que grandeur d'état de courant de la source de courant de soudage, uniquement le courant primaire du transformateur d'intensité (30) ou une grandeur d'état côté primaire, correspondant au courant primaire, et la source de courant de soudage comprenant un régulateur (68) pour produire un signal de commande pour l'unité de commande (25), en fonction du courant primaire ou de la grandeur d'état correspondant au courant primaire, **caractérisée en ce que** la source de courant de soudage présente un premier circuit de traitement (50) destiné à relever l'amplitude et la fréquence du courant primaire ou de la grandeur d'état côté primaire, qui correspond au courant primaire.

10. Source de courant de soudage selon la revendication 9, **caractérisée en ce que** la source de courant de soudage présente un circuit de correction (58) destiné à former une valeur de correction pour le courant primaire relevé ou pour la grandeur d'état côté primaire, qui correspond au courant primaire, en fonction de la fréquence de résonance.

11. Source de courant de soudage selon la revendication 10, **caractérisée en ce que** la source de courant de soudage présente un organe de mémoire (70) destiné à la mémorisation de valeurs de la fréquence de résonance ainsi que de l'angle de phase entre le courant secondaire du transformateur d'intensité (30) et le courant de soudage, en fonction de la résistance d'arc électrique (45).

12. Source de courant de soudage selon la revendication 10 ou la revendication 11, **caractérisée en ce que** la source de courant de soudage présente un organe de combinaison (54) destiné à combiner la valeur relevée du courant primaire ou de la grandeur d'état côté primaire, qui correspond au courant primaire, avec une valeur de correction.

13. Source de courant de soudage selon la revendication 12, **caractérisée en ce qu'**au moyen du régulateur (68), il est possible de produire pour l'unité de commande (25), un signal de commande, en fonction d'une comparaison de la valeur corrigée du courant primaire ou de la grandeur d'état côté primaire, qui correspond au courant primaire, avec une valeur de consigne du courant de soudage pouvant être prescrite par l'utilisateur.

14. Source de courant de soudage selon l'une des revendications 10 à 13, **caractérisée en ce que** la source de courant de soudage présente un deuxième circuit de traitement (60) destiné à relever la tension de sortie du redresseur (38), le deuxième circuit de traitement (60) étant relié au circuit de correction (58).

15. Source de courant de soudage selon l'une des revendications 10 à 14, **caractérisée en ce que** la source de courant de soudage présente un module dynamique (64) destiné au traitement de la valeur de correction fournie par le circuit de correction (58).
